# EUROPEAN PATENT APPLICATION

(11) **EP 4 438 782 A1**
(43) Date of publication of application: **02.10.2024**
(21) Application number: 23164419.6
(22) Date of filing: 27.03.2023
(51) Int. Cl.: D04H 1/4218, C08J 11/24, D04H 1/4274

(54) **GLASS FIBER PRODUCT CONTAINING RECYCLED GLASS FIBERS AND PROCESS FOR RECYCLING GLASS FIBER PRODUCTS**

(71) Applicant: Johns Manville, Denver, CO 80202 (US)
(72) Inventor: Christensen, Bernd, 97877 Wertheim (DE)
(74) Representative: Patentanwälte Olbricht Buchhold Keulertz

(57) **Abstract**

Subject of the invention is a method for recycling a glass fiber product waste to obtain recycled glass fibers. By using the waste glass mat recycling method of the invention a complete separation of the glass fibers from the binder or any other bonded precipitations is achieved. The glass fibers regained by the method are undamaged glass fibers having preserved their original geometry and mechanical performance. Surprisingly the recycled glass fibers have a surface that is very smooth, plain and wave less. A further subject of the invention is glass fiber product comprising glass fibers and at least one binder is provided, wherein the glass fibers contain at least 2 % by weight of recycled glass fibers and up to 98 % by weight of new glass fibers.

## Description

The invention relates to a method for recycling a glass fiber product to obtain recycled glass fibers and to a glass fiber product comprising glass fibers and at least one binder.

### BACKGROUND

Glass fiber materials are used in numerous product applications, in particular as reinforcing structures in fiber resin composites or floorings, as facers for insulation material and in various other applications. The glass-based fiber mats usually end up as waste materials at the end of their lifetime. There is also a low single digit percentage of direct production waste glass mats. This might be caused by optical defects, by quality defects or out of specification material as well as start-up and transition rolls. Such small percentage of binder solidified glass fiber-based production waste is not avoidable and in view of the yearly total tonnage being a significant amount.

In view of the carbon footprint or (GWP100) index it is the aim to reuse as much of the fiber glass based products to avoid carbon production, save energy in view of the production of new glass fibers and also avoid waste (landfill) and exposure of the environment by chemical substances.

Recycling methods for polymer waste are generally known. EP 3 523 366 A1 describes a method for recycling polyolefin containing waste by using a solvent with a specific Hansen parameter and contacting this mixture with a liquid filtration aid before separating the polyolefin from the mixture. The method is limited to polyolefin polymer waste.

DE 10 2017 216 685 A1 describes a method for the recovery of carbon fibers from a fiber composite material. The method comprises an electrical contacting of the carbon fibers with electrically conductive contacts. The two electrically conductive contacts are connected to an electrical voltage source and a voltage is applied, so that an electric current flows through the carbon fiber in the fiber composite material and the fiber composite material is heated to a temperature of 200 ° C to 800 ° C. The application is terminated when the plastic matrix has at least detached from the carbon fibers and carbon fibers can be recovered. The method can only be applied to electrically conductive fibers and is more expensive compared to other recycling methods.

Therefore, a technical objective of the invention is to provide a method for recycling glass fiber products waste and to regain the glass fibers.

Another technical objective of the invention is to provide a glass fiber product containing recycled glass fibers.

### SUMMARY OF THE INVENTION

In accordance with a first aspect of the invention, a method for recycling a glass fiber product to obtain recycled glass fibers is provided the method comprising the steps of
a. Providing glass fiber waste product(s) containing glass fibers and at least one binder, in particular glass fiber waste mats,
b. Mechanically treating the glass fiber product by compacting or partitioning,
c. Extracting the binder by subjecting the mechanically treated glass fiber product to solvolysis with a glycol as a solvent selected from tri-ethylene glycol, propylene glycol and ethylene glycol at temperatures between 150°C and 260°C for an exposure time between 2 and 30 min, preferably 5 and 20 min, and optionally a catalyst is used,
d. Separating the glass fibers from the solution by filtering,
e. cooling the glass fibers preferably to room temperature,
f. Washing the cooled glass fibers in clean water and
g. Drying the glass fibers after washing.

In accordance with another aspect of the invention a glass fiber product comprising glass fibers and at least one binder is provided, wherein the glass fibers contain at least 2 % by weight of recycled glass fibers and up to 98 % by weight of new glass fibers.

### DETAILED DESCRIPTION OF THE INVENTION

The method according to the invention includes an extraction step c. wherein the binder is extracted by subjecting the mechanically treated glass fiber product to solvolysis with a glycol. This step is also refed to as "glycolysis" in this application.

The solvent for the extraction step. i.e. the glycolysis, is selected from tri ethylene glycol,ethylene glycol and propylene glycol.

Glycols are 1,2-diols, in particular vicinal diols with a vicinal hydroxyl group. Ethylene glycol (EG) has the IUPAC name ethane-1,2-diol (CAS No. 110-80-5). Tri-ethylene glycol (TEG) has the IUPAC name 2,2'-[Ethane-1,2-diylbis(oxy)]di(ethan-1-ol) (CAS No. 112-27-6) and is also known as 2,2'-Ethylenedioxydiethanol. Propylene glycol has the IUPAC name propane-1,2-diol (CAS No. 57-55-6 racemic, 4254-15-3 S-enantiomer) and is also known as 1,2-Propanediol.

In the extraction step c. the solvent is preferably heated to a temperature between 150°C and 260°C and the mechanically treated parts of the glass fiber product are added to the heated solve

Step c. and the subsequent steps d., e. and f. build an extraction cycle. The extraction cylcle starting with step c. and being followed by the subsequent steps d. then e. and then f. is preferably repeated more than once, in particular up to 3 extraction cycles are conducted. In the extraction step c. preferably the solvent is first heated to the extraction temperature and the mechanically treated parts of the glass fiber product are added to the heated solvent.

In one embodiment ethylene glycol is used as the solvent in step c. and the extraction step c. is conducted at temperatures between 150°C and 190°C preferably between 160°C and 180°C and the exposure time is 5 to 25 min, preferably 10 to 20 min. A catalyst is used and the catalyst is preferably selected from ZnCl₂ in combination with urea, MgCl₂ in combination with urea or BaCl₂ in combination with urea or another suitable metal chloride in combination with urea is used. Up to 3 extraction cycles are conducted.

In another embodiment of the invention tri ethylene glycol is used as the solvent in step c. and the extraction step c. is conducted at temperatures between 200°C and 260°C, preferably between 240°C and 250°C, and the exposure time is 5 to 25 min, preferably 10 to 20 min. The extraction is conducted without a catalyst. Up to 3 extraction cycles are conducted.

The method is performed at atmospheric pressure. Air pressure can be used after the extraction to drive out the solvent through the filter.

The method can be used for glass fiber waste products with a binder selected from urea - formaldehyde resins, acrylic resins, acrylic resin dispersions and mixtures thereof. Preferably, the binder contains a melamine - urea - formaldehyde resin. If the binder includes acrylic dispersion the acrylic dispersion is preferably a cationic dispersion of a copolymer of acrylic acid esters, in particular a pure acrylic polymer.

The method provides recycled glass fiber which have an amount of residual organic compononts (remaining binder) after extraction, below 2 % by weight, preferably below 0.1 % by weight. Thus, almost the complete binder got removed by solvolysis.

By using the waste glass mat recycling method of the invention a complete separation of the glass fibers from the binder or any other bonded precipitations is achieved. The glass fibers regained by the method are undamaged glass fibers having preserved their original geometry and mechanical performance. So it is possible to get recycled glass fibers with comparable surface qualities compared to newly manufactured glass fibers.

Surprisingly the recycled glass fibers have a surface that is very smooth, plain and wave less. The roughness values measured by AFM are comparable to those of fresh glass fibers. The amount of binder is reduced and is down to less than 2% by weight, preferably less than 1.5% by weight, more preferred less than 0.5 % by weight, also preferred less than 0.3 % by weight, and preferably below 0.1 % of the total weight of the recycled glass fibers. The surface of the glass fibers recycled with the method shows comparable binder adhesion, allowing free fiber flow in the manufacturing process. The recycled glass fibers show no agglomeration characteristics during remanufacture of a nonwoven glass mat.

### Glass fiber product comprising recycled glass fibers

Another object of the invention is to provide a glass fiber product comprising glass fibers and at least one binder, wherein the glass fibers contain at least 2 % by weight of recycled glass fibers and up to 98 % by weight of new glass fibers based on the total weight of the fibers. Preferably, the glass fiber product contains at least 4 % by weight of recycled glass fibers, preferably at least 15 % by weight, more preferred at least 20 % by weight. The glass fiber product can in one embodiment contain 100 % by weight of recycled glass fibers.

The glass fiber product is preferably a glass fiber wet laid glass fiber mat.

The recycled glass fiber in the glass fiber product can have a residual amount of organic polymer content, which is the remaining binder after extraction, below 1 % by weight, preferably below 0.1 % by weight.

The recycled glass fiber in the glass fiber product can have a macro roughness of the recycled fiber surface measured by AFM below 20 nm, preferably below 10 nm, more preferably below 5 nm. Macro roughness reflects the surface height deviations in a larger area, also reflecting the waviness of the surface. The measured macro roughness quantitively scales debris and particles on the glass fiber surface. The nano-roughness reflects the localized roughness, e.g. small deflections within a line scan curve. Both macro nano roughness and nano roughness can also characterize the physical interlocking capabilities of the surface.

The recycled glass fiber, the glass fiber product or glass fiber fabric is preferably white in appearance.

Preferably the glass fiber product according to the invention has
a. a tensile strength MD of at least 200 N/5cm at an area weight of 50 g/m² and/or
b. a tensile strength CD of at least 120 N/5cm at an area weight of 50 g/m² and/or
d. a waviness of less than 5% over the width of 2 m and/or
e. a MD/CD strength ratio between 0.9 - 1.8.

The recycled glass fibers produced by the method according to the invention can be used in the glass fiber product according to the invention.

As the binder in a glass fiber product can be completely removed afterwards with the process according to the invention, multiple recycling cycles of glass fiber mat waste are feasible. Unexpectedly the evenness of glass fiber mats containing recycled glass fibers recycled with the method of the invention is better than the evenness of glass fiber mats containing no recycled fiber. An even surface is a required quality parameter by customers using the mat as facer materials. An even surface is also often required as an optical design feature of a surface in building materials. Even and low porous surfaces are also required for a later coating process. Both the top and bottom surface of glass fiber mats containing recycled fibers show such improved evenness. A homogeneous evenness (wrinkle free) also proves that spot agglomeration or clot building is not elevated and quite the contrary is decreased in mats comprising recycled fibers. This was a completely unexpected, surprising result.

The glass fiber mat product comprising recycled glass fiber by glycolysis according to the invention exhibits a significantly improved specific mechanical strength profile.

### EXAMPLES

### Recycling of glass fiber product waste

Waste glass fiber mats of between 0,45 mm to 1 mm thickness and an area weight between 45 g /sqm and 120 g/sqm were used. The amount of organic the organic component (binder) was determined by Loss of Ignition testing. The amount of the organic component was in the range of 15 % -21 % by weight. The organic component was a binder comprising 0-30% amino-acryl-icformaldehyde resin and 0-30 % thermoplastic polymers, less than 5 % functional organics and water as a solvent.

The examples conducted for glass fiber recycling were to solvolyze the glass fiber product waste by glycol substances and as comparative examples solvolyze the mat of fibers by super critical water. In the solvolysis glycol solubilization process a) Tri-ethylene glycol (TEG) at 250 degree Celsius and b) Ethylene glycol (EG) and a catalyst at 170 degree Celsius where used as solvent mixture. In the comparative examples (solvolysis super critical water dissolution process) super critical water at 250 bar and 400 degree Celsius was used at varying exposure times.

### Example #1 Solvolysis by Ethylene glycol (EG) and a catalyst

The DH 50 - DH 120 glass fiber waste mat was cut in parts of 2 cm × 2 cm. DH 50 - DH 120 types are nonwoven textile glass fiber fabrics made with glass fibers having a nominal length of 12 mm and a fiber diameter of 13 µm. The fibers are longitudinally laid down randomly and binder bonded to form a nonwoven fabric. The binder is an aqueous solution comprising 42 vol % of water, 54 vol % of a melamine formaldehyde condensation resin (Prefere^{®} 71 by dynea) with a dry mass weight of 60 % and 4 vol % of an epoxy functional silane (Silquest A-187) acting as an adhesion promoter, with a dry mass weight of 71 %. The numeric value in DH 50 corresponds to a nominal average area weight of 50 g/m², in DH 120 respectively to a nominal average area weight of 120 g/m². The nominal dry mass binder content in DH 50 - DH 120 is 18 weight %, measured by loss on ignition testing.

Ethylene glycol (EG) was used as solvent. The solvent Ethylene glycol mixed with ZnCl₂ + Ureaas catalyst was heated to 170 degree Celsius and the cut parts been added to the heated solvent. Approximately 5% by weight of waste glass mat compared to the solvent weight were added to the solvent. The amount of added waste glass fibers in a first extraction cycle was limited due to flooding of the material in the solvent. In following extraction cycles the wetting and flooding decreased enabling higher amounts of waste glass fiber mat material addition up to 20 % in this laboratory setup. In a commercial industrial setup higher amounts of waste glass mat should be recycle able by using stirring and dispersion means during solvolysis. The exposure time during one extraction cycle was 15 min.3 extraction cycles were done.

During the solvent extraction of the fibers a discoloration (browning) of the fibers took place. After cooling to room temperature, the fibers were washed in clean water and dried. The fibers were white in appearance after washing.

The fibers were then investigated by Scanning Electron Microscopy (SEM) and by Atomic Force microscopy (AFM). In atomic force microscopy a small silicon tap (contact radius 8 nm) deflects a cantilever. The deflection measures the surface roughness down to nanoscales.

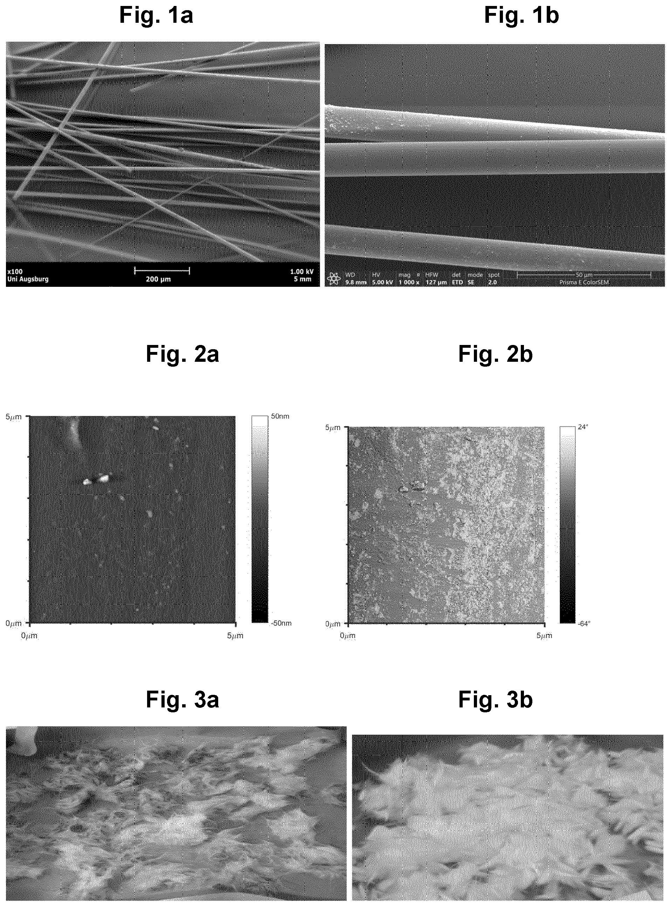

Figures 1a and 1b shows SEM scans of the recycled glass fibers, recycled with EG using 3 extraction cycles. Fig 1a shows the SEM scan 100 × (left) and fig. 1b shows the SEM scan 1000x (right). The figures show that the fiber surface is almost clean with some areas of smaller precipitants. The surface remained intact, no surface damaging, surface pitting or degradation is visible. The precipitants are agglomerated in some areas and not evenly distributed

The macro roughness was measured in an area of 5 µm × 5µm. The measured macro roughness scales debris and particles on the glass fiber surface quantitavely. The nano-roughness reflects the localized roughness.

Figures 2a and 2b show AFM scans of the recycled glass fiber surface, recycled with EG using 3 extraction cycles. The samples showed the following roughness values:

| | Macro surface roughness [nm] | nano roughness [nm] |
|---|---|---|
| #1 | 2.56 +/- 0.56 | 0.27 +/- 0.09 |

As can be seen from the values, the recycled glass fiber surface is very smooth, plain and wave less. These roughness values are comparable to those of fresh glass fiber.

### Example #2 - Solvolysis with Tri-ethethylene glycol (TEG)

The same DH 50 - DH 120 glass fiber waste mat as in example #1 was cut in parts of 2 cm × 2 cm.

Tri-ethylene glycol was used as a solvent. The solvent was heated to 250 degree Celsius and the cut parts were added to the heated solvent. The amount of added waste glass fibers to the heated solvent was the same as in example 1. The exposure time was again 15 min. Three extraction cycles were performed. After the first extraction cycle, similar to example #1, the waste glass fiber was thoroughly wettable without tendency for flooding.

During the solvent extraction of the fibers a discoloration (browning) of the glass fibers took place. Figure 3a shows the fiber flocs after 3 extraction cycles with solvent exposure at a temperature of 250 degree Celsius. After cooling to room temperature, the fibers were washed in clean water and dried. Figure 3b shows the glass fibers after 3 extraction cycles and subsequent 3 water washing cycles.

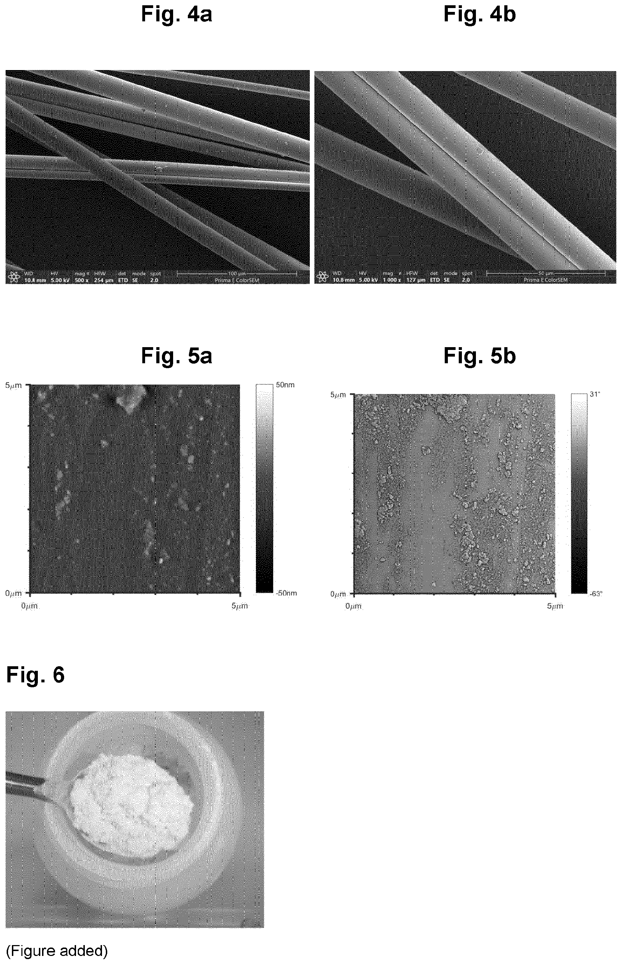

The same process was done with a powder milled out of DH50 (Figure 6). The powder was dispersed in TEG being heated to 220 degrees Celsius. The resulting suspension was then heated to 250 degrees Celsius. This extraction cycle was repeated 3 times and the browned powder washed with clean water. A slight browning remained in the washed powder.

The Tri-ethethylene glycol (TEG) washed waste glass fibers were then investigated by Scanning Electron Microscopy (SEM) and by Atomic Force microscopy (AFM).

Figure 4 shows SEM scans of the TEG recycled glass fibers, recycled with TEG as a solvolysis agent using 3 extraction cycles. Figures 4 a is a SEM scan 200 × (left) and Figure 4b is a SEM scan 1000x (right). The fiber surface in this example #2 is almost clean with some areas of smaller precipitants. The surface looks cleaner compared to example #1. In addition, using the TEG solvolysis (glycolyze) process the surface remained intact, no surface damaging, surface pitting or degradation is visible. The precipitants are almost evenly distributed.

The macro roughness was measured in an area of 5 µm × 5µm. The measured macro roughness scales debris and particles on the glass fiber surface quantitatively. The nano-roughness reflects the localized roughness.

Figures 5a and 5b show AFM scans of the recycled glass fiber surface, recycled with TEG using 3 extraction cycles. The samples showed the following roughness values:

| | Macro surface roughness [nm] | nano roughness [nm] |
|---|---|---|
| #2 | 3.27 +/- 0.58 | 0.29 +/- 0.11 |

As can be seen from the values of TEG example #2, the recycled glass fiber surface is again very smooth, plain and waveless. These roughness values are comparable to those of new glass fiber and indistinguishable to those of example #1 (EG + catalyst agent).

Both the SEM scans and AFM scans show a surface appearance and roughness of the recycled glass fiber, using EG or TEG as solvents, comparable to fresh glass fiber. No visual structural damages or degradation of the glass fiber occurred. By Fourier transformation of the AFM surface area profiles (Fig. 2 and Fig. 5), selection of surface Fourier data according to its wavelength and back transformation into three-dimensional data, an average lateral structural dimension (macro surface roughness) of precipitations can be measured.

### Comparative Example 3 - • Fresh ("pure") glass fibers

C-glass fibers for use in the DH50 to DH120 glass fabric having a nominal length of 12 mm and a fiber diameter of 13 µm were manufactured according to the known process of glass melting and dispensing and drawing the glass filaments through orifices or nozzles in platinum fiber bushings. The hot fresh melt glass fiber (fresh and DH50 - DH 120) are treated with an acidic solution to condition the surface.

Figure 7a shows fresh c-glass fibers in a bundle (Figure 7a left). Figure 7b shows a microscope picture (50x) of fresh c-glass fibers. (Figure 7b right). Figure 8a and 8b shows SEM scans of the fiber (Fig. 8a 5000x; Fig. 8b 10000x). Figures 8a and 8b show an almost clean surface with some line surface structures and some small precipitates. These might be small condensations out of the acidic water moistening.

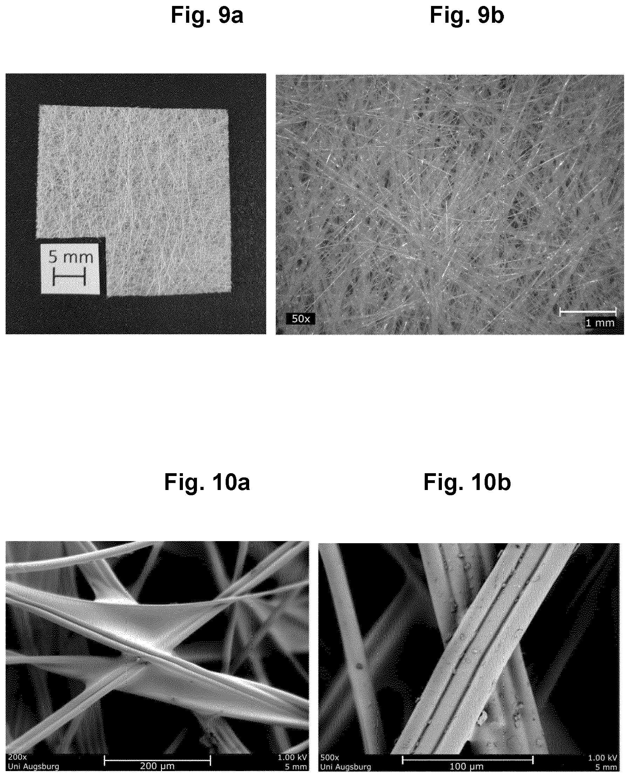

Figure 9a shows a DH 50 glass fiber nonwoven mat of fibers, while figure 9b shows a microscope picture (50x ) of this non woven mat with fresh glass fibers.

In Figure 10a and 10b SEM scans of the fiber can be seen. Figure 10a shows a binder cross linking [200x] and figure 10b a binder precipitates/agglomerates on the fiber [500x].

### Comparative Examples V1 and V2 - Solvolysis with super critical water

DH 50 glass fiber waste mat cuts of approx. 2 cm × 2 cm were processed in a reaction vessel for 5 minutes and 1 hour. As solvolyzing agent super critical water at 250 bar and 400 degree Celsius was used in the vessel process. Super critical water was used because it is a high-performance dissolution agent, it is just environmental friendly water and the process parameters are controllable over a wide range. In solvolysis experiment V1 with supercritical water 5 minutes of exposure time were used. In Solvolysis experiment V2 1 hour exposure time was used.

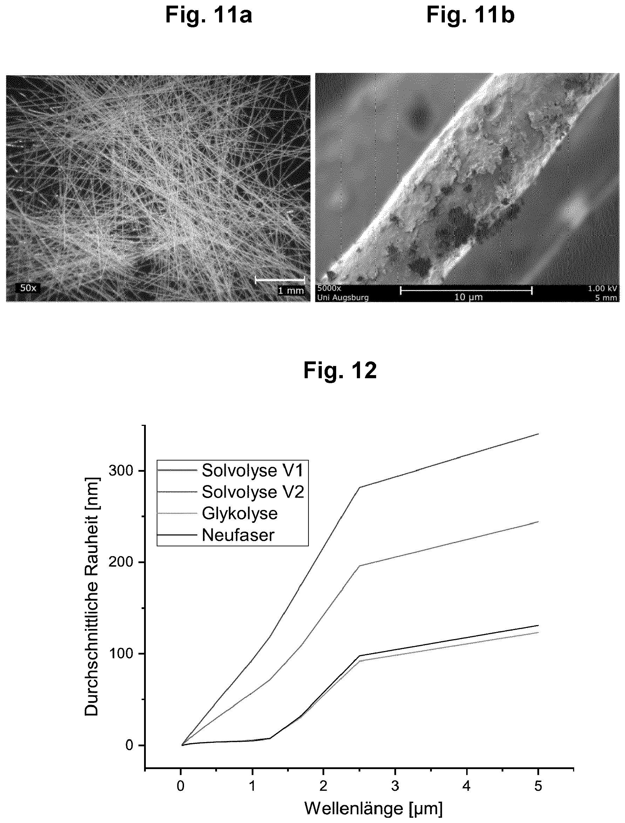

Figures 11a and 11 show microscope pictures of glass fibers after super critical water solvolyzing. Figure 11b is a SEM scan 10000x of glass fibers solvolysis. As can be seen in Figure 11b, the super critical water solvolysis completely removes the binder, but also physically degrades the fibers. The glass fibers are brittle afterwards and are degraded with pits and pores in the glass structure. These results are achieved after 5 minutes of exposure (Solvolysis experiment V1). After 1 hour exposure time (Solvolysis experiment V2) a significantly higher damaging of the glass fiber takes place. Because of this strong degradation, mat forming tests were not conducted, though processing the waste fiber at lower pressure and lower temperatures might show better results.

### Comparison of the examples

Figure 12 shows a lateral dimension of recycled glass fibers surface structures washed by glycol agents in example #2 (TEG glycolysis) and washed with super critical water (solvolysis V1 / V2) in comparison to a new glass fiber surface.

Figure 12 is an analysis of AFM glass fiber surface scan data for example #2 (average of 10 extracted samples), examples V1 and V2 and of the surface of a new glass fiber. As can be seen in figure 12, for super critical water recycled glass fibers both curves of V1 and V2 show significant increase in roughness over all wavelengths. This is due to the pits and pores in the damaged recycled glass fiber surface (Figure 11b). The graph shows pits and pores with lateral dimensions in the small nanometer range up to the 1.4 µm of this first range. V2 with 1 hour exposure time induced even more damages characterized by a steeper rise (deeper pits and pores) and larger roughness even at long wavelengths.

The AFM data for TEG glycolysis recycled fibers (mean value out of 10 recycled waste glass mat samples) show an almost flat region of low roughness (<10nm) up to 1.3 µm, almost congruent to new fiber. This reflects the even surface areas in the SEM pictures. These recycled fibers have a surface smoothness and texture identical to new fibers, which indicates that no pitting - even at a nanometer scale- occurred by the glycolytic agent and the process conditions. Lateral wavelengths in the range of between 1.3 µm to 2.5 µm show precipitations or binder residue and in addition might indicate surface pitting and pores. As can be seen the parts of the V1 and V2 curves in this lateral range are steeper and significantly larger compared to the experiment #1, #2 and the new fiber surface data. This indicates larger sized and deeper pitting or pores which corresponds with the SEM images in figure 11b.

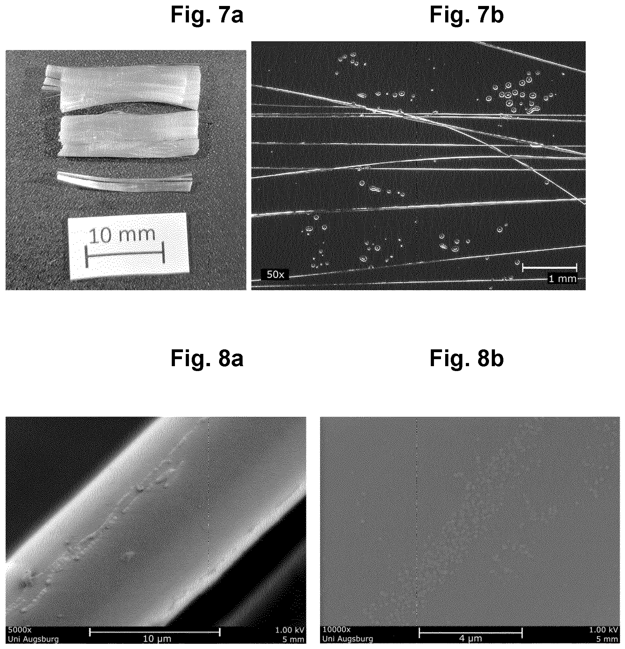

The graphs for the solvolyze/glycolysis recycled glass fibers and the new fibers in the range of between 1.3 µm to 2.5 µm show again an almost identical progression. In the lateral range between 1.3 µm to 1.7 µm the graphs are congruent. This likely reflects the water acid induced residues or precipitates (see figures 8a,b). Some of these residues might be also solubilized in the glycolysis recycling, indicated by a lower nano roughness of the recycled glass fiber compared to the nano roughness of a new glass fiber.

Between 1.7 µm and 2.5 µm lateral wavelength the surface roughness of the recycled fibers is increased compared to the fresh C-glass fiber (slightly increased curve steepness). This likely reflects binder residue. As can be seen, the binder particles or residue have a lateral dimension of above 1.7 µm and add a small macro roughness of below 10 nano meters (see above experimental results and curves in this lateral range).

The graph in Figure 12 in the range above 2.5 µm likely reflect the curvature of the glass fiber. This then likely masks the surface roughness data.

The following table shows average macro-roughness and nano roughness over a series of 10 AFM scans each.

**Table 1: AFM analysis of the surface roughness of recycled fibers after solvolysis of DH50 waste glass fiber mat with super critical water, Tri-ethethylene glycol (TEG).**

| | Macro surface roughness [nm] | nano roughness [nm] |
|---|---|---|
| New fiber | 5.8 +/- 7.7 | 0.97 +/- 0.57 |
| Example #2 (TEG) | 9.3 +/- 22.34 | 0.69 +/- 0.37 |
| Solvolyse V1 | 66.74 +/- 49.51 | 6.63 +/- 7.71 |
| Solvolyse V2 | 88.53 +/- 32.49 | 4.98 +/- 2.19 |

In summary, the measured AFM macro roughness values proof smooth plain surfaces of the recycled fibers and a homogeneous partition of nanoscale sized binder residue.

### • Loss on ignition analysis

DH50 glass fiber mat and recycled glass fibers were analyzed for their loss on ignition weight loss according to DIN EN 13820.

The following table summarizes the results:

**Table 2: Extraction results after solvolysis of DH50 waste glass fiber mat with Ethylene glycol (EG) and a catalyst and with Tri-ethethylene glycol (TEG).**

| Sample | Process | Loss on ignition [%] | Organic residue (binder part)[%] |
|---|---|---|---|
| | DH 50 nonwoven waste comprising binder | 18.1 | 100 |
| #1a | DH 50 3x with EG + Kat solvent at 170°C | 0.13 | 0.72 |
| #1b | DH 50 3x with EG + Kat solvent at 170°C | 0.03 | 0.16 |
| #2a | DH 50 3x with TEG at 250°C | 0.11 | 0.61 |
| #2b | DH 50 3x with TEG at 250°C (filtration with a steel filter heated to 200 C) | 0.11 | 0.61 |

Table 2 details the results of the fiber recycling process in view of the removal of the organic binder. The glass fiber waste mat lost 18.1 % by weight in the test. The extracted recycled fibers showed a weight loss of between 0.03 % to 0.11 % in the test. Thus, almost the complete binder got removed by solvolysis. The amount of residual organic components (binder) on the recycled glass fibers was below 1 % by weight.

### Example 5 - Glass fiber mat comprising recycled glass fibers

Recycled fibers were added to freshly manufactured glass fibers of the same type in amounts of 0 %, 4 %, 8 % and 18% by weight of the total glass fiber weight as shown in table 3. The glass fibers were mixed in dry form and afterwards mixed by stirring of the aqueous glass fiber slurry. A fiber mat was manufactured by adding a conventional binder system comprising a mixture of a melamine-urea-formaldehyde resin. The used binder is the same binder being used in the manufacturing process of the recycled original mat and being extracted in the described solvolysis based recycling process. The composition of the organic binder is the same as described in example #1 and example #2.

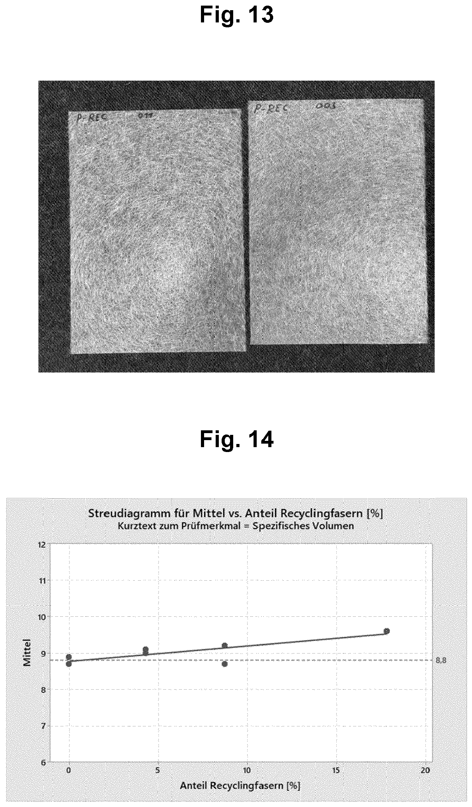

Recycled glass fibers were extracted as to the processes in table 2, specifically extracted in line with the processes used for samples #1b, #2a and #2b. Glass fiber mats were manufactured on a lab-size wet laid machine according to standard procedure. Figure 13 shows two glass fiber mats, the glass fiber mat on the left comprises no recycling fibers (#011 left) and the glass fiber mat on the right comprises 18 % recycling fiber extracted out of DH 50 in 3 extraction cycles with TEG at 250 C (#003 right). The glass fiber mat on the left was manufactured with new glass fibers as a reference material to compare with. The glass fiber mat on the right was manufactured with 18 % of glass fibers recycled out of waste DH50. There are no visual distinctions between both mats, in particular no browning or brown spots.

DH 50 nonwoven textile glass fiber fabrics were manufactured using 0 weight % to 18 weight % of recycled waste DH50 glass fiber fabric. The fibers, both fresh and recycled, have a nominal length of 12 mm and a fiber diameter of 13 µm. The fibers are longitudinally laid down randomly and are binder bonded to form a nonwoven fabric. The binder is an aqueous solution comprising 42 vol % of water, 54 vol % of a melamine formaldehyde condensation resin (Prefere^{®} 71 by dynea) with a dry mass weight of 60 % and 4 vol % of an epoxy functional silane (Silquest A-187) acting as an adhesion promoter, with a dry mass weight of 71 %.

The manufactured DH 50 recycling glass fiber containing mat and the DH 50 glass fiber mat out of new glass fiber were tested in view of some of their mechanical, chemical and physical properties.

The following table 3 lists the manufactured samples and some related mechanical and physical properties. DH 50 samples 011, 012 contain no recycled glass fiber, whereas DH 50 samples 007, 008 contain 4% by weight of recycled glass fiber, DH 50 samples 005, 006 contain 8 wt % of recycled glass fiber and DH 50 samples 003, 004 18 wt % of recycled glass fiber. All samples are otherwise the same DH 50 fabric in view of their composition and manufacturing process.

**Table 3: Fiber mat properties for manufactured mats using increasing amounts of recycled glass fiber**

| Sample | 011, 012 | 007, 008 | 005,006 | 003,004 |
|---|---|---|---|---|
| Recycled fiber content [wt %] | 0 | 4 | 8 | 18 |
| Area weight [g/m²] | 50 ± 1.29 | 51.6 ± 1.56 | 50.9 ± 1.34 | 50.7 ± 1.06 |
| Thickness [mm] | 0.37 | 0.39 | 0.38 | 0.39 |
| Specific Volume [cm³ /g] | 8.8 ± 0.05 | 9.1 ± 0.07 | 9 ± 0.35 | 9.6 ± 0.01 |
| Top/Bottom Surface Evenness [µm] | 68/72 | 66/68 | 66/68 | 64/66 |
| Tensile Modulus (MD) [N/m²] | 410 ± 25 | 747 ± 35 | 711 ± 13 | 693 ± 2 |
| Tensile Modulus (CMD) [N/m²] | 424 ± 13 | 607 + 6 | 620 ± 40 | 626 ± 1 |
| Specific tensile strength [(daN 5cm) / (g/m2)] | 21 + 1.5 | 27.2 ± 0.9 | 26.3 ± 0.9 | 24.3 ± 0.9 |
| Tensile Strength (MD) [N/m²] | 92 ± 1 | 139 ± 15 | 130 ± 19 | 134 ± 2 |
| Tensile Strength (CMD) [N/m²] | 84 ± 8 | 115 ± 4 | 108 ± 2 | 120 ± 6 |
| Pore Size [µm] | 31 | 26 | 26 | 25 |
| LOI [%] | 18.5 ± 0.1 | 17.9 ± 0.3 | 17.5 ± 0.4 | 20.5 ± 0.4 |
| Air permeability [L/m²s] | 4500 | 4107 | 4125 | 4141 |

### Physical properties of glass fiber mats comprising recycled glass fibers

### Area weight

The basis weight or weight per unit area [area weight] is determined according to DIN EN ISO 29073-1 (1992-08). The manufactured glass fiber mats according to the examples had area weights of between 50 to 52 g/m². The average weight in the examples was 50.8 g/m² within a standard deviation range of 1.3 % (0.65 g/m²). Thus, all samples according to the examples had the same area weight and those area weights being within the expected manufacturing variation.

### Thickness

The manufactured glass fiber mats according to the examples had thicknesses of between 0.37 mm to 0.39 mm. The average thickness in the examples was 0.38 mm and within a standard deviation range of 2.5 % (0.01 mm). Thus, all samples according to the examples had the same thickness and those thicknesses being within the expected manufacturing variation.

### Loss on ignition / Binder content

Loss on ignition on the manufactured fiber glass mats according to the examples was performed in accordance with TAPPI/ANSI Test Method T 1013 om-15. The Loss on Ignition is the amount of weight lost in the sample once it has gone through the heating process of up to 950 C. The volatile materials which are lost during the analysis typically consist of combined water (hydrates, for example) and CO₂ from carbonates.

Loss on Ignition of a sample is calculated by comparing the weight of a sample before and after it has been subjected to the high temperatures during ignition. The Loss on Ignition calculation represents the amount of organic matter that was in the sample. This method covers the determination of the percent loss on ignition of glass fiber mats. This ignition loss can be considered to be the binder content.

### Specific Volume

To determine the specific volume of a sample area the area weight of a respective sample was measured in accordance to DIN EN ISO 29073-1 (1992-08). Afterwards the LOI was performed to determine the binder amount and subtract the binder weight, thus obtaining the pure fiber weight of the sample. Based on these results the specific glass fiber volume of the mat was determined. The specific volume is indicative about the ability of the glass fiber to separate completely into individual fibers without fiber bundles and build a compact net of glass fibers without clumping and building agglomeration knots in the mat.

Figure 14 shows the specific volumes of glass fiber mats according to the examples in table 3. Figure 14 reflects an almost linear increase in the specific volume by adding an increasing amount of recycled glass fiber. At 18 % recycled glass fiber content, the two measurements overlapped. An increased specific volume is a desired glass fiber property as this value is related to the ability of the glass fibers to build a homogeneous glass fiber slurry without entanglements and without clogging. The fiber with higher specific volume shall show a better dispersion in the forming slurry. The better dispersion of the fibers in the recycled fiber mixes was optically confirmed in those examples. In manufacturing a higher specific volume shall result in a more uniform fiber web with smaller pore size and better mechanical stability (higher tensile strength, see below).

### Air permeability

Air permeability was measured in accordance to DIN EN ISO 9237. 5 for round samples having a surface area of 10 cm2 were cut out of the mat. The samples are subjected to vacuum until an end pressure of 1 mbar is reached. The corresponding air flow [L/m²s] is measured.

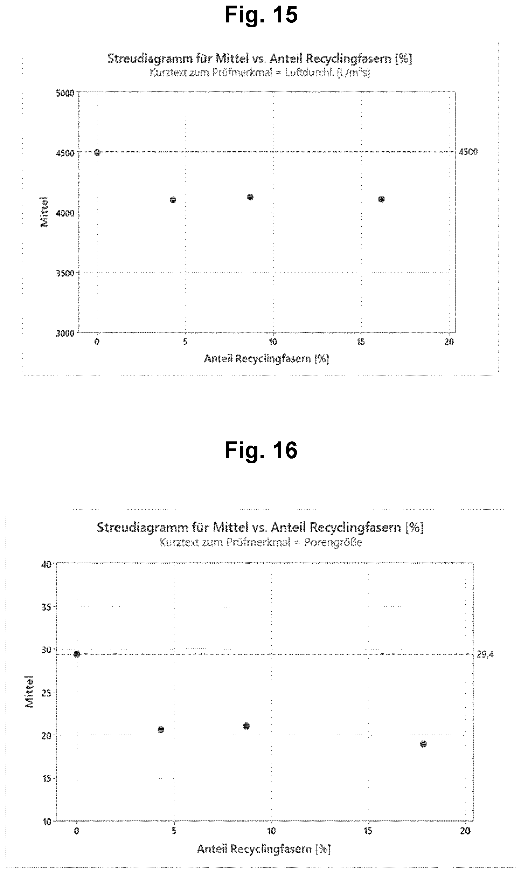

Figure 15 shows the air permeability of glass fiber mats according to the examples in table 3. Figure 15 shows a decreased air permeability in samples containing recycled glass fiber. This is an expected physical outcome in view of the increased specific volume and better uniformity in these examples. An increased specific volume should result in a more compact web with a more impermeable web. A denser web shall result in lower pore sizes and flow channels in the web, thus in a higher air flow resistance and lower air permeability.

### Pore size

The mean pore size was measured by optical methods. To determine the pore size optical pictures of the surface were taken by photo shots with a resolution of 14100 dpi. Black areas are identified, separated and encircled by the software. A mean pixel value (number of pixels in a separate black area) was calculated. As a pixel represents a 1.8 µm × 1.8 µm square area of the sample, the corresponding pore area can be calculated. Out of such pore area determination the pore size is calculated by taking the square root and division by pi (ideal round pore assumed in this model).

The values in table 3 detail the calculated value, while the values in the following figure 16 are based on pixel counts. Figure 16 shows the pore size (pixel number count on y - axis) of glass fiber mats according to the examples in table 3. As can be seen the data trend in figure 16 is almost identical to the data trend of decreased air permeability in samples containing recycled glass fiber as detailed in Figure 15. As described before, an increased specific volume should result in a more compact web with a consolidated net of glass fibers. A compacted web shall result in reduced pore sizes.

### Top/Bottom Surface Evenness - Peak and valley (Wrinkle) roughness

Wrinkle measurement is an internal test method and has no ISO or ASME standard while roughness (ISO 4287 & ASME B46.1) is well recognized and standardized method. The measurement is based on a 600dpi scanned image have 0 to 255 gray scale value. The program/code calculates the roughness based on the measured and displayed gray scale value. Grayscale variations are correlating to roughness of the surface. The grayscale is normalized by using 3 d measured (according to ISO) reference scans.

For the Z-direction (roughness / wrinkle) calculation the program calculates a reference plane (Gaussian grey scale distribution fitted to a plane of 2D mean values). Adjacent gray values of the surface are weighted against the reference plane (threshold roughness). If the adjacent gray values are greater than the threshold roughness, then this point is considered as a peak otherwise as a valley. In a following step the valley points are used to calculate a valley plane and all peak points are used to calculate a peak plane. The difference value between peak plane (medium peak threshold value) and the valley plane (medium valley threshold value) represents the evenness (wrinkle) of the fiber mat.

As can be seen in Table 3 the evenness of glass fiber mats containing recycled glass fibers is better than the evenness of glass mat containing no recycled fiber. An even surface is a required quality parameter by customers using the mat as facer materials. An even surface is often required as an optical design feature of a surface in building materials. Even and low porous surfaces are also required for later coating process. Both the top and bottom surface of mats containing recycled fibers show such improved evenness. A homogeneous evenness (wrinkle free) also proves that spot agglomeration or clot building is not elevated and quite the contrary is decreased in mats comprising recycled fibers. This was a completely unexpected, surprising result.

### Mechanical properties of glass fiber mats comprising recycled glass fibers

### Tensile Strength (MD) / Tensile Strength (CMD)

At recycled glass fiber contents of 4 %, 8 % and 18 % a significantly increased specific tensile strength was measured in both the machine direction (MD) and in cross machine direction (CMD). The data is detailed in table 3.

The measured step is a 151 % increase in tensile strength (MD) at 4% recycled glass fiber, a 91% increase in tensile strength (MD) at 8% recycled glass fiber and a 103 % increase in tensile strength (MD) at 18% recycled glass fiber. For the cross direction (CMD) the measured increase in tensile strength (CMD) at 4% recycled glass fiber was 137 %, the measured increase in tensile strength (CMD) at 8% recycled glass fiber was 94 % and the measured increase in tensile strength (CMD) at 18% recycled glass fiber was 111 %. It is surprising that already small amounts of around 4 % of added recycling fiber increase the tensile strength by more than 90%, in particular more than 110 %, preferably by more than 130 %, most preferably by more than 150 %. The increase in tensile strength might be related to the observed increased consolidation of a web containing recycled glass fiber and could also be related to a better bonding of the fiber glass surface to the binder. The recycled fibers might act as condensation nuclei for binder wetting. The latter maybe based on some residual leftover of bonded binder at the fiber surface. The increase in mechanical performance is also reflected in an increase in the E-module.

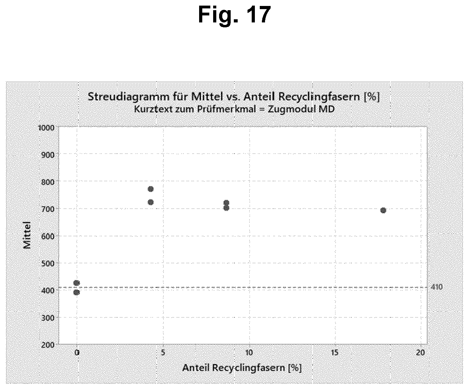

Figure 17 shows a specific e-modulus test data (MD) for glass fiber mats comprising increasing amounts of recycling glass fiber extracted out of waste DH 50 mat.

The measured step is a 182 % increase in e- modulus (MD) at 4% recycled glass fiber, a 173% increase in e- modulus (MD) at 8% recycled glass fiber and a 169 % increase in e- modulus (MD) at 18% recycled glass fiber. For the cross direction (CMD) the measured increase in tensile mo (CMD) at 4% recycled glass fiber was 143 %, the measured increase in e- modulus (CMD) at 8% recycled glass fiber was 146 % and the measured increase in e- modulus (CMD) at 18% recycled glass fiber was 147 %. It is surprising that already small amounts of around 4 % of added recycling fiber increase the e- modulus by more than 100%, in particular more than 140%, preferably by more than 160 %.

In summary glass fiber mat comprising recycled glass fiber by glycolysis exhibits an significantly improved specific mechanical strength profile

Specific details are given in the description to provide a thorough understanding of the embodiments. However, it will be understood by one of ordinary skill in the art that the embodiments may be practiced without these specific details. For example, well-known structures and techniques have been shown without unnecessary detail in order to avoid obscuring the embodiments. This description provides example embodiments only, and is not intended to limit the scope, applicability, or configuration of the invention. Rather, the preceding description of the embodiments will provide those skilled in the art with an enabling description for implementing embodiments of the invention. Various changes may be made in the function and arrangement of elements without departing from the spirit and scope of the invention.

## Claims

1. Method for recycling a glass fiber product to obtain recycled glass fibers comprising the steps of
a. Providing glass fiber waste products containing glass fibers and at least one binder, in particular glass fiber waste mats,
b. Mechanically treating the glass fiber product by compacting or partitioning,
c. Extracting/Removing the binder by subjecting the mechanically treated glass fiber product to solvolysis with a glycol as a solvent selected from Triethylene glycol, propylene glyocol and ethylene glycol at temperatures between 150°C and 260°C for an exposure time between 2 and 30 min, preferably 5 and 20 min, and optionally a catalyst is used,
d. Separating the glass fibers from the solution by filtering,
e. Cooling the glass fibers,
f. Washing the cooled glass fibers in clean water and
g. Drying the glass fibers after washing.

2. Method according to claim 1, wherein in step c. the solvent is heated to a temperature between 150°C and 260°C and the mechanically treated parts of the glass fiber product are added to the heated solvent.

3. Method according to claim 1 or 2, wherein step c. and the subsequent steps d., e. and f. build an extraction cycle and the extraction cycle is repeated more than once, in particular up to 3 extraction cycles are conducted.

4. Method according to claim 1, wherein the solvent in step c. is ethylene glycol and the extraction step c. is conducted at temperatures between 150°C and 190°C, preferably between 160°C and 180°C and the exposure time is 5 to 25 min, preferably 10 to 20 min and a catalyst is used and the catalyst is preferably selected from ZnCl₂ in combination with urea, MgCl₂ in combination with urea or BaCh in combination with urea.

5. Method according to claim 1, wherein the solvent in step c. is tri ethylene glycol and the extraction step c. is conducted at temperatures between 200°C and 260°C, preferably between 240°C and 250°C, and the exposure time is 5 to 25 min, preferably 10 to 20 min.

6. Method according to claim 1, wherein the binder in the glass fiber waste products is selected from melamine - urea - formaldehyde resins, acrylic resins, acrylic resin dispersions and mixtures thereof.

7. Glass fiber product comprising glass fibers and at least one binder, wherein the glass fibers contain at least 2 % by weight of recycled glass fibers and up to 98 % by weight of new glass fibers of the total glass fiber weight.

8. Glass fiber product according to claim 7, wherein the glass fiber product contains at least 4 % by weight of recycled glass fibers, preferably at least 15 % by weight of the total glass fiber weight, more preferred at least 20 % by weight of the total glass fiber weight.

9. Glass fiber product according to claim 7, wherein the glass fiber product is a glass fiber wet laid glass fiber mat.

10. Glass fiber product according to claim 7, wherein the recycled glass fiber have a residual amount of organic polymer content/remaining binder [after extraction] below 1 % by weight.

11. Glass fiber product according to claim 7, wherein the macro roughness of the recycled fiber surface measured by AFM is below 20 nm, preferably below 10 nm, more preferably below 5 nm.

12. Glass fiber product according to claim 7, wherein the recycled glass fiber are white [in appearance],

13. Glass fiber product according to claim 7 wherein the glass fiber product has
a. a tensile strength MD of at least 200 N/5cm at an area weight of 50 g/m² and/or
b. a tensile strength CD of at least 120 N/5cm at an area weight of 50 g/m² and/or
d. a waviness of less than 5% over the width of 2 m and/or
e. a MD/CD strength ratio between 0.9 - 1.8.

14. Glass fiber product according to any of the claims 7 to 13 wherein the recycled glass fibers are produced by a method according to any of the claims 1 to 6.
